# EUROPÄISCHE PATENTANMELDUNG

(11) **EP 1 106 941 A2**
(43) Veröffentlichungstag der Anmeldung: **13.06.2001**
(21) Anmeldenummer: 00121416.2
(22) Anmeldetag: 29.09.2000
(51) Int. Cl.: F25B 37/00, F25B 39/02, F25B 15/10

(54) **Absorber/Verdampfer für eine Diffusionsabsorptionsanlage**

(30) Priorität: 03.12.1999 DE 19958450
(71) Anmelder: Buderus Heiztechnik GmbH, D-35576 Wetzlar (DE)
(72) Erfinder: Schulte, Uwe, 35037 Marburg (DE); Heitze, Edgar, 57234 Wilnsdorf (DE); Korinth, Christoph, 57555 Mudersbach (DE); Vloon, Paulus Jacobus, 7422 RM Deventer (NL); Wierenga, Hendrik Jacob Lammert, 8196 KC Welsum (NL)

(57) **Zusammenfassung**

Bei einer Diffusionsabsorptionsanlage, bei der in einem Absorber ein Wärmeaustausch zwischen einer Kältemittelösung und Heizungswasser bzw. in einem Verdampfer ein Wärmeaustausch zwischen einem Kältemittel und Quellwasser erfolgt, werden Absorber/Verdampfer benötigt, die eine möglichst große Wärmetauscherfläche besitzen, und die auf der Außenfläche möglichst vollständig von dem abwärts strömenden Medium (Kältemittelösung/Kältemittel) benetzt werden. Der Absorber/Verdampfer besteht zu diesem Zweck aus einer oder mehreren konzentrisch ineinander angeordneten, stehenden Zylindertasche(n) (2). Dabei sind auf den Außenflächen und gegebenenfalls auch auf den Innenflächen geneigte Strukturen (4), etwa als geneigte Prägungen oder Riefen, angeordnet. Das abwärts strömende Medium erfährt dadurch außer der vertikalen noch eine tangentiale Strömungskomponente, durch welche eine breitflächige Benetzung der Oberfläche erzielt wird.

## Beschreibung

Die Erfindung betrifft einen Absorber/Verdampfer nach dem Oberbegriff des Patentanspruches 1.

Diffusionsabsorptionsanlagen sind als Kleinkälteanlagen zur Verwendung in Haushaltskühlschränken seit langem bekannt. Sie können mit einer Umkehrung des Funktionsablaufs in einer entsprechenden konstruktiven Gestaltung unter Anwendung eines Absorbers auch zu Heizzwecken eingesetzt werden. In diesen Anlagen wird eine Kältemittellösung aus dem Kältemittel Ammoniak (NH3) und Wasser als Stoffpaar eingesetzt. Dabei stellt das Wasser den absorbierenden Stoff dar, wobei als druckausgleichendes Hilfsgas in der Regel Wasserstoff oder Helium verwendet wird.

Absorber in Anlagen für größere Leistungen müssen in der Lage sein, größere Mengen der Kältemittellösung zu absorbieren und die Absorptionswärme mit möglichst geringen Verlusten an ein Medium abzugeben. Als wärmeabführendes Medium wird bei kleineren Anlagen Umgebungsluft und bei größeren Anlagen Heizungswasser in einem Sekundärsystem verwandt. Andererseits müssen Verdampfer in der Lage sein, über die Wärmeaufnahme aus Quellwasser eine größere Menge an Kältemittel zu verdampfen.

Um eine möglichst große Wärmetauscherfläche zu erzielen und damit solche Absorptionsanlagen auch für größere Leistungen einsetzen zu können, wurde in der EP 0 413 791 B1 vorgeschlagen, den Absorber/Verdampfer aus einer stehend angeordneten Rohrschlange, bzw. aus mehreren konzentrisch ineinander angeordneten Rohrschlangen zu gestalten. Dabei sollte die Außenfläche kapillar wirksam sein, um eine möglichst vollständige Benetzung mit dem abwärts strömenden Medium (Kältemittellösung/Kältemittel) zu erreichen.

Ferner sollten die Rohrwindungen so einander zugeordnet werden, daß das Medium im Spalt zwischen benachbarten Rohrschlangen schraubenförrnig nach unten strömt, sich dabei jedoch infolge der kapillar wirksamen Oberfläche über die komplette Rohraußenfläche verteilt. Ein solcher aus Rohrwindungen bestehender Absorber/Verdampfer wird als noch effektiver als etwa ein Absorber/Verdampfer mit plattenartigen Wärmetauscherelementen nach der US-A-4 127 127 009 bezeichnet.

Der angestrebte Effekt ist mit einem Absorber/Verdampfer nach der EP 0 413 791 B1 wohl zu erzielen. Es müssen jedoch sehr lange Rohre zur Verfügung gestellt werden, die in entsprechenden Anlagen zu den benötigten Rohrschlangen gewickelt werden. Dabei ist ein recht großer logistischer Aufwand erforderlich. Aber auch der Verformungsaufwand und die Kosten sind recht hoch.

Der Erfindung liegt die Aufgabe zugrunde, einen Absorber/Verdampfer für eine Diffusionsabsorptionsanlage zu schaffen, bei dem der Aufwand an Material und für die Fertigung in einem angemessenen Verhältnis zu der zu erzielenden Leistung steht. Dabei soll auch in diesem Fall ein äußerst effektiver Absorber/Verdampfer für Anlagen mit größerer Leistung geschaffen werden.

Der erfindungsgemäße Absorber/Verdampfer besitzt die im Patentanspruch 1 genannten Merkmale.

Statt der bisher bekannten Rohrwicklungen besitzt der Absorber/Verdampfer eine oder mehrere Zylindertaschen. Das ist sowohl in der Fertigung als auch in der Handhabung wesentlich einfacher und preisgünstiger. Von entscheidender Bedeutung für die Effektivität des Absorbers/Verdampfers ist es aber, daß das Medium nicht einfach in Strähnen an der Oberfläche der/des stehenden Zylinder(s) abwärts strömt, sondern daß die Oberfläche vollständig benetzt wird. Zu diesem Zweck sind auf der Außenfläche geneigte Strukturen angeordnet. Diese geben dem abwärts strömenden Medium eine zusätzliche tangentiale Strömungskomponente. Es erhält dadurch fortwährend auch eine quer zur vertikalen Achse gerichtete Lenkung, so daß es nach einer gewissen Anreicherung im breiten Strom über die Kanten der Strukturen abströmt. Durch eine gezielte Strukturierung ist es möglich, die tangentialen und vertikalen Strömungskomponenten so zu koppeln, daß ein vollständiges Benetzen der Wärmetauscherfläche erreicht werden kann. Die stehend angeordnete(n) Zylindertasche(n) bilden somit in Verbindung mit der äußeren Struktur einen äußerst wirksamen Absorber/Verdampfer. Ergänzend kann die Oberfläche der Zylindertaschen auch mit einer Kapillarstruktur versehen sein, wodurch die Benetzung noch gesteigert wird.

Es empfiehlt sich, die Strukturen in Form von geneigten Prägungen oder Riefen bereits bei der Formung der Zylindertaschen in das Material einzubringen. Diese können sich als schraubenförmige Wicklung um die Außenfläche der Zylindertasche(n) erstrecken. Das führt dann zu einer kontinuierlichen tangentialen Strömungskomponenten für das Medium, die aber immer von einem Überströmen über die Kante und damit von einer flächigen vertikalen Komponenten überlagert wird.

Selbstverständlich können die Strukturen auch auf der Innenfläche, d.h. auf der Seite des Heizungswassers/Quellwassers angeordnet sein, um auch hier eine Steigerung des Wärmetauschers zu erzielen.

Um eine möglichst hohe Leistung zu erzielen, sollten mehrere Zylindertaschen der erfindungsgemäßen Art konzentrisch ineinander angeordnet sein. Auf diese Weise ist es möglich, einen Absorber/Verdampfer für Anlagen mit größeren Leistungen zu schaffen.

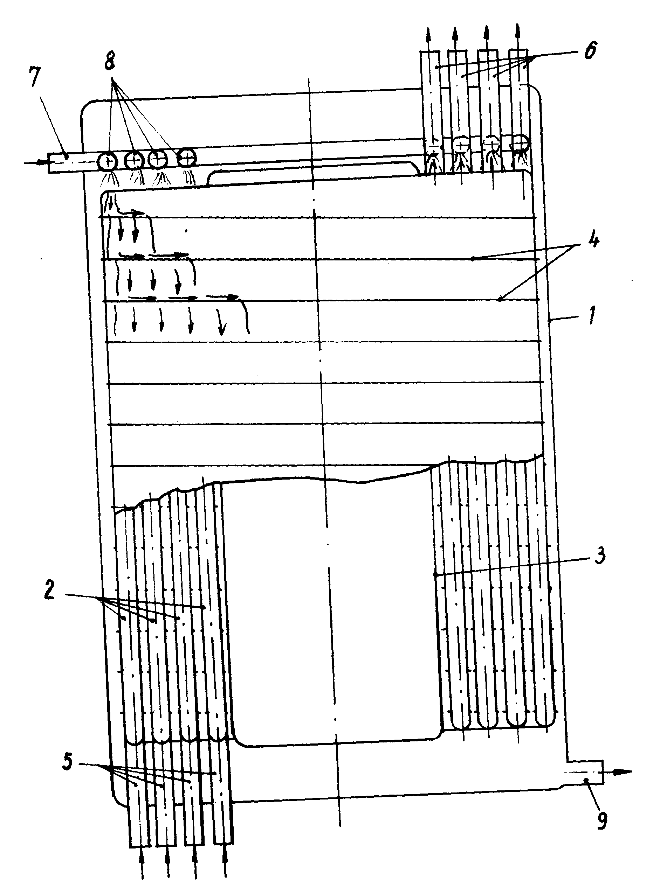

Die Zeichnung stellt in einer einzigen Figur einen vertikalen Schnitt eines Absorbers/Verdampfers dar (teilweise als Ansicht).

In einem äußeren Gehäuse 1 sitzen im dargestellten Fall vier konzentrisch ineinander angeordnete Zylindertaschen 2. Die innere dieser Taschen umschließt einen Verdrängerkörper 3. Die Zylindertaschen 2 bestehen jeweils aus äußeren und inneren Mänteln, die stirnseitig miteinander verschweißt sind. Beim Erstellen der Mäntel kann in einem einheitlichen Arbeitsgang oder auch in einem zweiten Arbeitsgang eine geneigte Struktur 4 in Form einer Aus- oder Einprägung oder auch in Form von Riefen zumindest auf die Außenfläche aufgebracht werden. Sofern das Material direkt verformt wird, kann die Prägung auf derD Außenfläche aber gleichzeitig auch auf der Innenfläche in Erscheinung treten. Die Struktur 4 ist bewußt nur angedeutet. Es versteht sich von selbst, daß sie eine unterschiedliche Formgebung besitzen, und daß sie an der Oberfläche auf- oder eingebracht sein kann. Sie muß auch nicht auf dem Umfang der Zylindertaschen 2 umlaufen. Auch ähnliche, unterbrochene Strukturen sind denkbar.

Die Zylindertaschen 2 besitzen untere Zuläufe 5 und obere Abläufe 6 für Heizungswasser/Quellwasser. Das Medium (Kältemittellösung/Kältemittel) wird durch einen oberen Einlauf 7 mit einem angeschlossenen Verteiler 8 eingebracht. Es strömt an den Zylindertaschen 2 nach unten und fließt dann durch den Auslauf 9 wieder ab. Ohne weitere Maßnahmen würde das Medium einfach in Strähnen an den Außenflächen der Zylindertaschen 2 nach unten strömen und diese nur unvollkommen benetzen. Die Struktur 4 sorgt hingegen dafür, daß zu der vertikalen noch eine tangentiale Strömungskomponente hinzukommt. Auf diese Weise strömt das Medium breitflächig nach unten und benetzt die ganzen Außenflächen der Zylindertaschen 2, wie es in der Zeichnung oben links angedeutet ist.

## Patentansprüche

1. Absorber/Verdampfer für eine Diffusionsabsorptionsanlage mit mindestens einem stehend angeordneten, innen von Heizungswasser/Quellwasser durchströmten und außen von einem abwärts strömenden Medium (Kältemittellösung/Kältemittel) bespülten Wärmeaustauscher,
dadurch gekennzeichnet, daß der mindestens eine Wärmeaustauscher als stehend angeordnete Zylindertasche (2) ausgebildet ist, auf deren Außenfläche geneigte, dem abwärts strömenden Medium eine zusätzliche tangentiale Strömungskomponente gebende und damit ein vollständiges Benetzen der Wärmetauscherfläche bewirkende Strukturen (4) angeordnet sind.

2. Absorber/Verdampfer nach Anspruch 1,
dadurch gekennzeichnet, daß die Strukturen (4) als geneigte Prägungen oder Riefen der Außenfläche gestaltet sind.

3. Absorber/Verdampfer nach den Ansprüchen 1 und 2,
dadurch gekennzeichnet, daß die Strukturen (4) als eine schraubenförmig um die Außenfläche der Zylindertasche (2) verlaufende Prägung oder Riefe gestaltet ist.

4. Absorber/Verdampfer nach einem der Ansprüche 1 bis 3,
dadurch gekennzeichnet, daß entsprechende Strukturen auch auf der Innenfläche angeordnet sind.

5. Absorber/Verdampfer nach einem der Ansprüche 1 bis 4,
dadurch gekennzeichnet, daß die Oberfläche der Zylindertaschen (2) kapillar wirksam ist.

6. Absorber/Verdampfer nach einem der Ansprüche 1 bis 5,
dadurch gekennzeichnet, daß mindestens zwei, vorzugsweise vier, solcher Zylindertaschen (2) konzentrisch ineinander angeordnet sind.
